# EUROPÄISCHE PATENTSCHRIFT

(11) **EP 0 611 779 B1**
(45) Veröffentlichungstag und Bekanntmachung des Hinweises auf die Patenterteilung: **18.08.1999**
(21) Anmeldenummer: 94101012.6
(22) Anmeldetag: 25.01.1994
(51) Int. Cl.: C08F 10/00, C08F 4/654, C08F 4/656

(54) **Olefinpolymerisationskatalysator**
Olefin polymerisation catalyst
Catalyseur pour la polymérisation d'oléfines

(30) Priorität: 16.02.1993 US 17885
(43) Veröffentlichungstag der Anmeldung: 24.08.1994
(73) Patentinhaber: HÜLS AKTIENGESELLSCHAFT, 45764 Marl (DE); SHELL OIL COMPANY, Houston, Texas 77252-2463 (US)
(72) Erfinder: Wilson, Stanley Edward, Dr., Houston, Texas 77084 (US); Larson, Gerald Louis, Prof. Dr., Newton, Pennsylvania 18940 (US); Hazin, Paulette N., Dr., Houston, Texas 77083 (US)
(74) Vertreter: Dörries, Hans, Dr.

(56) Entgegenhaltungen:
- EP-A- 0 415 704
- EP-A- 0 480 434
- EP-A- 0 481 748
- EP-A- 0 490 584
- US-A- 4 946 816

## Beschreibung

### Gegenstand der Erfindung

Gegenstand der vorliegenden Erfindung sind ein hochaktiver Olefinpolymerisationskatalysator und das Herstellungsverfahren desselben. Im einzelnen bezieht sich die Erfindung auf eine magnesiumhaltige Komponente eines Olefinpolymerisations-Prokatalysators, auf den aus dieser Komponente hergestellten Prokatalysator und Katalysator sowie auf das Verfahren der Olefinpolymerisation, bei dem dieser Katalysator zum Einsatz kommt.

### Hintergrund der Erfindung

Hochaktive Katalysatoren, die aus einer Aluminiumalkylverbindung, einem Elektronendonator und einer halogenierten Titanverbindung auf einer festen, unterschiedliche Magnesiumverbindungen enthaltenden Trägersubstanz hergestellt werden, katalysieren bekanntlich die Polymerisation von α-Olefinen. Als Magnesiumverbindung wird im allgemeinen wasserfreies Magnesiumchlorid, entweder allein oder zusammen mit anderen Magnesiumverbindungen, oder eine durch Halogenierung organischer Magnesiumverbindungen mit chlorhaltigen Verbindungen hergestellte organische Magnesiumverbindung verwendet. Die Magnesiumverbindung kann aber auch in der festen Trägerkomponente enthalten sein, bei der es sich in den meisten Fällen um Siliciumdioxid handelt.

Bei derartigen Polymerisationskatalysatoren haben die Eigenschaften der festen Trägerkomponente entscheidenden Einfluß auf die Eigenschaften des fertigen Katalysators, d.h. auf seine Aktivität. Diese Eigenschaften lassen sich durch das Herstellungsverfahren der Trägerkomponenten wesentlich beeinflussen.

Eine Reihe von Olefinpolymerisations-Prokatalysatoren wird aus Magnesiumalkoholaten hergestellt, deren Alkoholatkomponenten ein oder zwei Kohlenstoffatome enthalten. Magnesiumethylat ist eine besonders interessante Vorstufenkomponente für Prokatalysatoren. Die Verwendung von Magnesiumethylat bringt jedoch ein gewissermaßen einzigartiges Problem mit sich: Im Gegensatz zu den meisten anderen Magnesiumalkoholaten ist Magnesiumethylat im zugehörigen Alkanol, d.h. in Ethanol, nur schwer löslich. Zur Solubilisierung von Magnesiumalkoholat und insbesondere von Magnesiumethylat wurden bisher mehrere Maßnahmen vorgeschlagen, darunter die Bildung von Magnesiumethylatkomplexen durch Job, US-Patent 4.710.482.

Bisher wurden mehrere Verfahren veröffentlicht, die unter anderem die Solubilisierung von Magnesiumethylat durch Reaktion mit Kohlendioxid in Ethanol umfassen. Arzoumanidis, US-Patent 4.540.679, stellt eine Olefinpolymerisations-Katalysatorkomponente her, indem er eine Suspension von Magnesiumethylat in Ethanol mit Kohlendioxid umsetzt. Der entstandenen Lösung wird eine aluminiumorganische Verbindung in einer Kohlenwasserstofflösung zugesetzt, wodurch granulatartige Teilchen entstehen, die als Trägermaterial für die Titanverbindungen dienen, die sich durch den Kontakt des Granulats mit Titantetrachlorid bilden. Nestlerode et al., US-Patent 4.728.705, lassen Magnesiumethylat in Ethanol mit Kohlendioxid zu einer Lösung reagieren. Diese Lösung wird zur Herstellung von festen Teilchen im Sprühverfahren getrocknet oder alternativ zur Imprägnierung von Trägerteilchen eingesetzt. Die bei der einen wie bei der anderen Variante entstehenden Teilchen eignen sich zur Herstellung eines Olefinpolymerisations-Prokatalysators mit besonders wünschenswerter Morphologie.

Die Reaktion von Magnesiumethylat mit Kohlendioxid in Ethanol läßt einen löslichen Komplex mit Magnesium-, Ethylat- und Kohlendioxidanteilen entstehen, der häufig als karbonisiertes Magnesiumethylat ("CMEO") bezeichnet wird. Die genaue Struktur des Komplexes ist noch nicht völlig geklärt; man nimmt jedoch an, daß es sich um eine bei niedrigem Druck stabile Form folgender Formel handelt 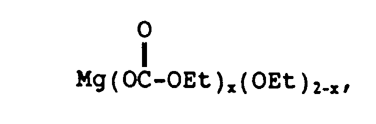 wobei x eine Zahl zwischen 0,1 und 2 ist und der Komplex in Ethanol löslich ist. Die oben angegebenen Autoren zeigen zwar Verfahren zur Umwandlung dieses kohlendioxidhaltigen Komplexes in Olefinpolymerisations-Prokatalysatoren und mithin in Olefinpolymerisations-Katalysatoren auf, es wäre jedoch von Vorteil, aus dem karbonisierten Magnesiumethylatkomplex verbesserte Olefinpolymerisations-Prokatalysatoren und somit -Katalysatoren mit höherer Aktivität und verbesserter Selektivität für isotaktisches Polypropylen herzustellen.

In US-A 4,946,816 wird ein fester, in Kohlenwasserstoffen unlöslicher α-Olefinpolymerisationskatalysator beschrieben, welcher ein Produkt umfaßt, das erhalten wird durch (a) Herstellung einer Lösung einer magnesiumhaltigen Verbindung aus einem Magnesiumhydrocarbylcarbonat oder einem Magnesiumcarboxylat, (b) Fällung von festen Teilchen aus dieser Lösung durch Behandlung mit einem Halogenid eines Übergangsmetalls und einem Organosilan der Formel RₙSiR'₄₋ₙ, in der n für 0 bis 4 steht, R Wasserstoff oder einen Alkyl-, Halogenalkyl- oder Arylrest mit 1 bis 10 Kohlenstoffatomen oder einen Halogensilylrest oder Halogenalkylsilylrest mit 1 bis etwa 8 Kohlenstoffatomen bedeutet und R' für OR oder ein Halogenatom steht; (c) Umfällung der festen Teilchen aus einer Lösung, die einen cyclischen Ether enthält; und (d) Behandeln der festen Teilchen mit einer Übergangsmetallverbindung und einem Elektronendonator.

EP- 0 415 704 A2 offenbart einen Katalysator zur Verwendung bei der Polymerisation von Olefinen, der einen Träger enthält, der wiederum eine aus einer Lösung gefällte Magnesiumverbindung ist und eine katalytische Komponente umfaßt, die ein Titanhalogenid, Vanadylhalogenid oder Vanadiumhalogenid ist. Der Katalysator wird hergestellt nach einem Verfahren, das die Stufen umfaßt, in denen man (A) zusammenmischt (a) eine oder mehrere im einzelnen definierte, Alkoholatgruppen enthaltende Magnesiumverbindungen, (c) einen im einzelnen definierten einwertigen gesättigten oder ungesättigten Alkohol oder einen mehrwertigen Alkohol zur Umsetzung mit (b) Kohlendioxid in einem inerten Kohlenwasserstoff als Lösemittel, um die Komponente (A) herzustellen; (B) die Komponente (A) mit einem jeweils im einzelnen definierten Titanhalogenid und/oder Vanadylhalogenid und/oder Vanadiumhalogenid und/oder einem Silanhalogenid der Formel SiXₛ(OR⁹)_{4 - s} zusammen mit (e) einer im einzelnen definierten Borverbindung zu einem Feststoff I umsetzt; (C) den Feststoff I mit (f) einem cyclischen Ether umsetzt, wodurch der Feststoff I gelöst und als Feststoff II wieder gefällt wird; und (D) den Feststoff II einer weiteren Reaktion mit einer Komponente (B) unterwirft, die aus einem Titanhalogenid und/oder Vanadylhalogenid und/oder Vanadiumhalogenid besteht, wodurch ein Feststoff III entsteht, worauf entweder eine weitere Umsetzung mit einem Gemisch aus der Komponente (B) und (h) einem Elektronendonator oder eine Reaktion von (g) mit dem Feststoff III folgt, wodurch man schließlich und endlich den Feststoff IV zur Verwendung als katalytische Komponente erhält.

In EP 0 481 748 A2 wird ein Olefinpolymerisationskatalysator beschrieben, der eine Organoaluminiumverbindung als Kokatalysator, einen Selektivitätsregulator und einen neuen Olefinpolymerisations-Prokatalysator umfaßt, der erhältlich ist, indem man ein vierwertiges Titanhalogenid, einen Halogenkohlenwasserstoff, einen Elektronendonator und eine feste Prokatalysator-Vorstufe miteinander in Berührung bringt, wobei die Prokatalysator-Vorstufe durch Erhitzen eines karbonisierten Magnesiumethoxids mit einer phenolischen Verbindung von erhöhter Acidität erhalten wurde.

EP 0 480 434 A2 offenbart eine feste Katalysatorkomponente für die (Co)polymerisation von Ethylen, die Magnesium, Halogen und Titan enthält und erhältlich ist, indem man (i) eine Dialkylmagnesiumverbindung, ein Siliciumhalogenid und gegebenenfalls ein Alkylhalogenid in einem inerten organischen Lösemittel löst, so daß ein granulierter Feststoff ausfällt; (ii) den granulierten Feststoff weiter mit einem Titanhalogenid, -alkoxid oder halogenalkoxid umsetzt, um eine feste Katalysatorkomponente herzustellen; und (iii) die feste Komponente aktiviert, indem man sie mit einem Alkylaluminiumhalogenid in Berührung bringt, sofern in der Stufe (ii) ein Titanalkoxid oder -halogenalkoxid verwendet wurde.

### Zusammenfassung der Erfindung

Gegenstand der vorliegenden Erfindung sind ein verbessertes Olefinpolymerisations-Katalysatorsystem mit höherer Aktivität, bezogen auf den Titananteil im Prokatalysator, sowie ein Verfahren zur Polymerisation von α-Olefinen bei Anwesenheit eines solchen Katalysators.

Ein Gegenstand der Erfindung ist insbesondere eine Prokatalysator-Vorstufe für die Olefinpolymerisation, die erhältlich ist durch Umsetzen
(a) eines karbonisierten Magnesiumalkoholats der allgemeinen Formel 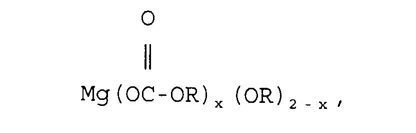 wobei R eine Kohlenwasserstoffgruppe mit 1 bis 20 Kohlenstoffatomen und x eine Zahl von 0,1 bis 2 ist, mit
(b) einem oder mehreren Halogensilanen bei einer Temperatur von 40 bis 150°C. Die Komponenten (a) und (b) können auch in Gegenwart eines inerten Verdünnungsmittels, z.B. eines Kohlenwasserstoffs, eines Halogenwasserstoffs oder von Mischungen dieser Verdünnungsmittel, zusammengebracht werden.

Ein weiterer Gegenstand der Erfindung ist ein Olefinpolymerisations-Prokatalysator, der durch Reaktion eines vierwertigen Titanhalogenids und eines Elektronendonators mit einer Prokatalysator-Vorstufe erhältlich ist, die wiederum durch die Reaktion
(a) eines karbonisierten Magnesiumalkoholats der allgemeinen Formel 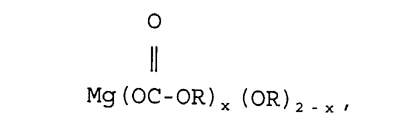 wobei R eine Kohlenwasserstoffgruppe mit 1 bis 20 Kohlenstoffatomen und x eine Zahl von 0,1 bis 2 ist, mit
(b) einem oder mehreren Halogensilanen bei einer Temperatur von 40 bis 150°C erhältlich ist.

Ein anderer Gegenstand der Erfindung ist ein Olefinpolymerisationskatalysator, der durch Umsetzung des zuvor beschriebenen Prokatalysators mit einem aluminiumorganischen Kokatalysator und einem Selektivitätsregulator erhalten wird.

Ein noch anderer Gegenstand der Erfindung ist ein Verfahren zur Polymerisation eines oder mehrerer α-Olefine durch Umsetzen eines oder mehrerer dieser α-Olefine unter Polymerisationsbedingungen mit dem zuvor genannten Olefinpolymerisationskatalysator.

Die vorliegende Erfindung bewirkt eine erhebliche Senkung der Katalysatorherstellungskosten, wie Betriebs- und Lösemittelrückgewinnungskosten. Die Polymerisation von α-Olefinen mit dem Katalysator der vorliegenden Erfindung führt zu einer höheren Katalysatoraktivität und Polymeren mit besserer Selektivität und geringerem Titanrückstand.

### Beschreibung der Erfindung

Gegenstand der vorliegenden Erfindung ist die Herstellung einer Olefinpolymerisations-Prokatalysatorvorstufe durch Umsetzung eines karbonisierten Magnesiumalkoholats mit einer oder mehreren Halogensilanverbindungen bei erhöhter Temperatur. Um die Polymerisations-Prokatalysatorvorstufe als neue feste Substanz zu erhalten, können das karbonisierte Magnesiumethylat und die Halogensilanverbindung bei erhöhter Temperatur auch in Gegenwart eines inerten Verdünnungsmittels wie einem Kohlenwasserstoff, einem Halogenkohlenwasserstoff oder Mischungen davon zur Reaktion gebracht werden. Die Prokatalysator-Vorstufe wird mit dem vierwertigen Titanhalogenid und einem Elektronendonator mit oder ohne inertes Verdünnungsmittel zusammengebracht; dadurch entsteht der Prokatalysator in Form von sphäroidalen Teilchen. Wird dieser Prokatalysator mit einem aluminiumorganischen Kokatalysator und einem Selektivitätsregulator umgesetzt, entsteht ein hochaktives Olefinpolywerisations-Katalysatorsystem, das besonders zur Polymerisation von niederen α-Olefinen zu einem hochselektiven Polymerprodukt geeignet ist.

Das zur Herstellung der Prokatalysator-Vorstufe eingesetzte karbonisierte Magnesiumalkoholat hat folgende allgemeine Formel: 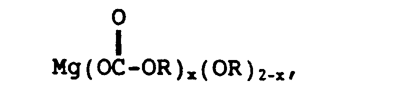 wobei R eine Kohlenwasserstoffgruppe mit bis zu 20 Kohlenstoffatomen und x eine Zahl zwischen 0,1 und 2 ist. Bei der Kohlenwasserstoffgruppe handelt es sich um eine Alkylgruppe, z.B. Methyl- oder Ethylgruppe, um eine Arylgruppe, z.B. Phenylgruppe, substituiert oder nichtsubstituiert, oder Naphthylgruppe, oder um eine Alkarylgruppe, z.B. p-Tolyl- oder Ethylphenylgruppe. R ist vorzugsweise eine Alkylgruppe mit bis zu 6 Kohlenstoffatomen, wobei eine Alkylgruppe mit bis zu 3 Kohlenstoffatomen besonders bevorzugt ist. Zu den geeigneten karbonisierten Magnesiumalkoholaten zählen karbonisiertes Magnesiummethylat, karbonisiertes Magnesiumethylat, karbonisiertes Magnesiumpropylat, karbonisiertes Magnesiumbutylat, karbonisiertes Magnesiumphenolat, karbonisiertes Magnesiumphenylethylat, karbonisiertes Magnesium-p-tolylat, karbonisiertes Magnesiumisobutylat und karbonisiertes Magnesiumnaphtholat. Karbonisiertes Magnesiumethylat wird bevorzugt eingesetzt.

Die Herstellung einer Lösung von karbonisiertem Magnesiumalkoholat, wie karbonisiertem Magnesiumethylat, in Ethanol ist allgemein bekannt, unter anderem auch durch die obengenannten US-Patente 4.540.679 und 4.728.705. Im allgemeinen wird zur Herstellung der Lösung von karbonisiertem Magnesiumethylat Kohlendioxid in in Ethanol aufgeschlämmtes Magnesiumethylat oder Magnesiummetall geleitet, indem man zum Beispiel das gasförmige Kohlendioxid durch die Aufschlämmung perlen läßt oder Trockeneis hinzufügt. Das Magnesiumalkoholat wird durch die Wechselwirkung mit Kohlendioxid und Ethanol "löslich gemacht", und zwar wahrscheinlich durch die Bildung eines komplexen karbonisierten Alkoholats der allgemeinen Formel 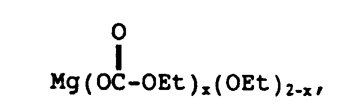 wobei x eine Zahl zwischen 0,1 und 2 einschließlich ist. Vorzugsweise liegt x jedoch zwischen 1 und 2. Der karbonisierte Komplex ist in Ethanol löslich, und der Verlauf der Reaktion läßt sich durch Beobachten des Verschwindens des unlöslichen Magnesiumalkoholats verfolgen.

Gemäß der vorliegenden Erfindung wird das karbonisierte Magnesiumalkoholat, z.B. karbonisiertes Magnesiumethylat, mit einer oder mehreren Halogensilanverbindungen umgesetzt, um das Kohlendioxid zumindest teilweise aus dem karbonisierten Magnesiumalkoholat zu entfernen. Mindestens 65 % des karbonisierten Magnesiumalkoholats sollten dekarbonisiert werden. Eine Dekarbonisierung des karbonisierten Magnesiumalkoholats von mindestens 90 % oder gar 100 % wird bevorzugt. Der Grad der Dekarbonisierung wird mit Hilfe der ¹³C-Kernresonanzspektroskopie (NMR) bestimmt. Die Halogensilanverbindung sollte vorzugsweise 1 bis 4 Halogenatome, besonders bevorzugt 1 oder 2 Halogenatome, enthalten. Als Halogenatome können zum Beispiel Chlor, Brom, Jod und Fluor eingesetzt werden, wobei Chlor jedoch bevorzugt ist. Bevorzugt sollte die Halogensilanverbindung höchstens zwei Halogenatome enthalten, wie zum Beispiel Trialkylchlorsilan, Dialkyldichlorsilan oder Diaryldichlorsilan.

Zu den geeigneten Halogensilanverbindungen zählen Trichlorsilan, Trimethylchlorsilan, Chlorphenyldimethylsilan, n-Propyltrichlorsilan, Methyltrifluorsilan, Methyltrichlorsilan, Dimethyldifluorsilan, Trimethyljodsilan, Trimethylbromsilan, Triethylbromsilan, Tetrachlorsilan, Phenyltrichlorsilan, Dimethyldichlorsilan und Mischungen davon. Vorzuziehen sind Halogensilanverbindungen wie Trimethylchlorsilan, Dimethyldichlorsilan und Mischungen davon. Mit Dimethyldichlorsilan ergibt sich eine höhere Katalysatoraktivität und eine Verminderung der in Xylol löslichen Verbindungen. Somit ist Dimethyldichlorsilan das bevorzugte Halogensilan.

Halogensilan ist in ausreichender Menge vorzusehen, so daß das Molverhältnis von Halogen zu Magnesium zwischen 0,1 und 50 liegt. Das Molverhältnis von Halogen zu Magnesium sollte vorzugsweise zwischen 1,5 und 40, besser aber noch zwischen 2 und 20 liegen.

Das karbonisierte Magnesiumalkoholat und die Halogensilanverbindung werden bei erhöhter Temperatur zur Reaktion gebracht. Das karbonisierte Magnesiumalkoholat und die Halogensilanverbindung können aber auch bei erhöhter Temperatur in Gegenwart eines inerten Verdünnungsmittels, wie einem Kohlenwasserstoff, einem Halogenkohlenwasserstoff oder Mischungen davon, zusammengebracht werden, in dem die Halogensilanverbindung löslich, das Reaktionsprodukt jedoch unlöslich ist. Zu den geeigneten inerten Verdünnungsmitteln zählen Kohlenwasserstoffe, wie Isooctan und Isopentan, aromatische Kohlenwasserstoffe, wie Benzol, Ethylbenzol, Toluol und Xylol, sowie aromatische Halogenkohlenwasserstoffe, wie Chlortoluol, Chlorbenzol, Dichlorbenzol und Brombenzol. Die bevorzugten inerten Verdünnungsmittel sind Toluol, Xylol, Chlortoluol und Chlorbenzol.

Das Herstellen der Mischung läßt sich, sofern erforderlich, durch übliche Verfahren, wie Schütteln oder Rühren in einem herkömmlichen Gerät, erleichtern. Die Mischung wird auf eine erhöhte Temperatur im Bereich von 40 °C bis 150 °C erwärmt und hinreichend lange bei dieser Temperatur gehalten, um eine möglichst vollständige Chlorierung zu erreichen. Die Mischung sollte für einen Zeitraum von 15 Minuten bis 180 Minuten erwärmt werden, wobei ein Zeitraum zwischen 40 und 120 Minuten vorzuziehen ist. Ein Erwärmen der Mischung auf eine erhöhte Temperatur von 50 °C bis 120 °C, besser noch von 65 bis 100 °C, ist bevorzugt. Die entstehende feste Prokatalysator-Vorstufe wird durch Filtrieren oder Dekantieren gewonnen. Diese feste Prokatalysator-Vorstufe wird in der Regel mit einem leichtflüchtigen Kohlenwasserstoff wie Isooctan oder Isopentan versetzt und getrocknet; der gewonnene Feststoff kann aber auch ohne weitere Behandlung zur Herstellung des Prokatalysators eingesetzt werden.

Der Olefinpolymerisations-Prokatalysator wird durch Umsetzung der festen Prokatalysator-Vorstufe mit einem vierwertigen Titanhalogenid in Gegenwart eines Elektronendonators und gegebenenfalls eines inerten Verdünnungsmittels hergestellt. Das vierwertige Titanhalogenid enthält mindestens zwei, vorzugsweise jedoch vier Halogenatome. Bei diesen handelt es sich um Chlor-, Brom-, Jod- oder Fluoratome. Die vierwertigen Titanhalogenidverbindungen weisen bis zu zwei Alkoxy- oder Aryloxy-Gruppen auf. Als vierwertige Titanhalogenidverbindungen eignen sich zum Beispiel Alkoxytitanhalogenide wie Diethoxytitandichlorid, Diethoxytitandibromid, Isopropoxytitantrichlorid und Phenoxytitantrichlorid sowie Titantetrahalogenide wie Titantetrachlorid oder Titantetrabromid. Das bevorzugte vierwertige Titanhalogenid ist Titantetrachlorid.

Das bei der Herstellung des Olefinpolymerisations-Prokatalysators gegebenenfalls verwendete inerte Verdünnungsmittel ist vorzugsweise ein Kohlenwasserstoff oder Halogenkohlenwasserstoff mit jeweils bis zu 12, besser noch mit bis zu 9 Kohlenstoffatomen. Zu den geeigneten Kohlenwasserstoffen zählen Isooctan, Isopentan, Toluol, Ethylbenzol, Benzol, Xylol, Diethylbenzol und Hexan. Bevorzugte Halogenkohlenwasserstoffe sind aliphatische oder aromatische Halogenkohlenwasserstoffe. Aliphatische Halogenkohlenwasserstoffe sind zum Beispiel Methylenchlorid, Dichlorethan, Methylenbromid, Chloroform, Tetrachlorkohlenstoff, 1,2-Dibromethan, 1,1,3-Trichlorpropan, Trichlorcyclohexan, Dichlorfluormethan und Tetrachlorisooctan. Als aromatische Halogenkohlenwasserstoffe eignen sich z.B. Chlorbenzol, Brombenzol, Dichlorbenzol und Chlortoluol. Unter den aliphatischen Halogenkohlenwasserstoffen werden Tetrachlorkohlenstoff und 1,1,2-Trichlorethan bevorzugt. Die vorzugsweise verwendeten inerten Verdünnungsmittel sind Chlorbenzol, Chlortoluol, Isopentan, Xylol und Toluol.

Bei den Elektronendonatoren, die geeigneterweise bei der Herstellung des Prokatalysators verwendet werden, handelt es sich um die herkömmlichen Elektronendonatoren, die allgemein für Olefinpolymerisations-Prokatalysatoren auf Titanbasis eingesetzt werden, nämlich z.B. Ether, Ester, Ketone, Amine, Imine, Nitrile, Phosphine, Stibine, Arsine und Alkoholate. Bevorzugte Elektronendonatoren sind Ester und hierbei insbesondere aliphatische Ester aromatischer Monocarbon- oder Dicarbonsäuren. Zu diesen bevorzugten Elektronendonatoren zählen z.B. Benzoesäuremethylester, Benzoesäureethylester, p-Ethoxybenzoesäureethylester, p-Methylbenzoesäureethylester, Phthalsäurediethylester, Phthalsäuredibutylester, Phthalsäurediisobutylester, Terephthalsäurediisopropylester und Naphthalindicarbonsäuredimethylester. Der Elektronendonator ist eine einzelne Verbindung oder eine Mischung aus zwei oder mehr Verbindungen, wird vorzugsweise jedoch als einzelne Verbindung eingesetzt. Von den bevorzugten EsterElektronendonatoren sind Benzoesäureethylester und Phthalsäurediisobutylester besonders geeignet. Der Elektronendonator wird in ausreichender Menge vorgesehen, so daß das Molverhältnis des Elektronendonators zum Magnesium im Prokatalysator von 0,002 bis 0,3 liegt. Hierbei ist ein Molverhältnis von Elektronendonator zu Magnesium im Prokatalysator von 0,03 bis 0,2, besser noch ein Verhältnis von 0,03 bis 0,16 bevorzugt.

Die Art und Weise, wie die feste Prokatalysator-Vorstufe, das vierwertige Titanhalogenid, das gegebenenfalls eingesetzte inerte Verdünnungsmittel und der Elektronendonator zur Reaktion gebracht werden, ist wichtig, jedoch nicht kritisch, und ist im allgemeinen herkömmlich. In einer Ausführung der Erfindung werden zunächst die Prokatalysator-Vorstufe und das vierwertige Titanhalogenid gemischt, und sodann wird dieser Mischung der Elektronendonator zugesetzt. Gemäß einer bevorzugten Ausführung werden Elektronendonator und Prokatalysator-Vorstufe mit dem vierwertigen Titanhalogenid oder einer Mischung aus vierwertigem Titanhalogenid und dem gegebenenfalls eingesetzten inerten Verdünnungsmittel gemischt, und sodann wird der entstandene Feststoff einmal oder mehrmals mit vierwertigem Titanhalogenid oder der Mischung aus vierwertigem Titanhalogenid und dem gegebenenfalls eingesetzten inerten Verdünnungsmittel zusammengebracht. Der erste Kontakt zwischen Elektronendonator, Prokatalysator-Vorstufe und vierwertigem Titanhalogenid oder der Mischung aus vierwertigem Titanhalogenid und dem gegebenenfalls eingesetzten inerten Verdünnungsmittel erfolgt geeigneterweise bei einer Temperatur zwischen Umgebungstemperatur und 150 °C. Eine bessere Wechselwirkung zwischen diesen Einsatzstoffen wird durch eine Erwärmung dieser Stoffe erzielt, wobei für den ersten Kontakt Temperaturen zwischen 70 °C und 130 °C, bevorzugt zwischen 75 °C und 110 °C, gewählt werden.

Bei einer anderen bevorzugten Ausführung wird ein Teil der bei der Herstellung des Prokatalysators zuzugebenden Menge an Elektronendonator bereits bei der Herstellung der Prokatalysator-Vorstufe zugesetzt. Im besonderen werden das karbonisierte Magnesiumalkoholat und die Halogensilanverbindung bei erhöhter Temperatur in Gegenwart eines oder mehrerer Elektronendonatoren und des gegebenenfalls eingesetzten inerten Verdünnungsmittels zur Reaktion gebracht. Es wird eine ausreichende Menge an Elektronendonator vorgesehen, so daß das Molverhältnis von Elektronendonator zu Magnesium in der Prokatalysator-Vorstufe zwischen 0,006 und 0,40, vorzugsweise jedoch zwischen 0,03 und 0,20 liegt. Bevorzugte Elektronendonatoren sind Benzoesäureethylester und Phthalsäurediisobutylester.

Die Prokatalysator-Vorstufe und die halogenierte vierwertige Titanverbindung werden mit einem Überschuß der Titanverbindung in Kontakt gebracht. Pro Mol der Magnesiumverbindung sollten im allgemeinen mindestens 2 Mol der Titanverbindung eingesetzt werden. Vorzugsweise werden pro Mol der Magnesiumverbindung zwischen 4 und 100 Mol, besser noch zwischen 8 und 20 Mol, der Titanverbindung verwendet. Der Kontakt erfolgt in einem oder mehreren Schritten, die jeweils einen Zeitraum zwischen einigen Minuten und mehreren Stunden beanspruchen. Normalerweise läßt man die Reaktion 0,1 bis 6 Stunden, vorzugsweise jedoch 0,5 bis 3,5 Stunden laufen.

Bei jedem Kontakt mit vierwertigem Titanhalogenid kann eine Teilmenge des inerten Verdünnungsmittels anwesend sein; in manchen Fällen wird die Reaktion zudem durch die Gegenwart eines Säurehalogenids wie Benzoylchlorid oder Phthaloylchlorid erleichtert. Der als kugelförmige Teilchen erhaltene Prokatalysator wird im allgemeinen einer abschließenden Behandlung unterzogen, und zwar einer Endwäsche mit einem inerten Kohlenwasserstoff mit bis zu 10 Kohlenstoffatomen und einer Trocknung unter Stickstoff. Für die Wäsche eignen sich inerte Kohlenwasserstoffe wie Isopentan, Isooctan, Hexan, Heptan und Cyclohexan.

Das bevorzugte Reaktionsprodukt hat nach der Endwäsche einen Titangehalt von 0,5 bis 6,0 Gewichtsprozent. Ein Titangehalt zwischen 1,0 und 4,0 Gewichtsprozent ist bevorzugt. Das Atomverhältnis von Titan zu Magnesium im Endprodukt liegt zwischen 0,01 : 1 und 0,2 : 1, vorzugsweise jedoch zwischen 0,02 : 1 und 0,1 : 1. Der so erhaltene Prokatalysator ist unter Ausschluß von Sauerstoff und aktiven Wasserstoffverbindungen lagerbeständig. Alternativ kann der Prokatalysator auch direkt nach der Kohlenwasserstoff-Wäsche, d.h. ohne Trocknung, eingesetzt werden. Bei der Herstellung des Olefinpolymerisationskatalysators wird der so erhaltene Prokatalysator mit einem aluminiumorganischen Kokatalysator und einem Selektivitätsregulator umgesetzt.

Bei dem Kokatalysator handelt es sich um eine aluminiumorganische Verbindung aus der Reihe der Kokatalysatoren auf Aluminiumbasis, die üblicherweise mit Prokatalysatoren auf Titanbasis eingesetzt werden. Aluminiumorganische Verbindungen sind zum Beispiel Trialkylaluminium-, Alkylaluminiumalkoholat- und Alkylaluminiumhalogenidverbindungen, bei denen jede Alkylgruppe 2 bis 6 Kohlenstoffatome aufweist. Die bevorzugten aluminiumorganischen Verbindungen sind halogenidfrei; besonders geeignet sind Trialkylaluminiumverbindungen wie Triethylaluminium, Triisobutylaluminium, Triisopropylaluminium und Diethylhexylaluminium. Triethylaluminium ist der bevorzugte Vertreter der Klasse der Trialkylaluminiumverbindungen. Der Kokatalysator wird in ausreichender Menge eingesetzt, um im Prokatalysator ein Atomverhältnis von Aluminium zu Titan zwischen 1 : 1 und 300 : 1, vorzugsweise jedoch zwischen 10 : 1 und 100 : 1, sicherzustellen.

Die Selektivitätsregulatoren, die bei der Herstellung des Olefinpolymerisationskatalysators Anwendung finden, sind die, die allgemein in Verbindung mit Prokatalysatoren auf Titanbasis und aluminiumorganischen Kokatalysatoren eingesetzt werden. Zu den geeigneten Selektivitätsregulatoren zählen sowohl die oben aufgeführten Elektronendonatoren für die Prokatalysator-Herstellung als auch Organosilanverbindungen wie Alkylalkoxysilane und Arylalkoxysilane der Formel

R'ᵣSi(OR)₄₋ᵣ,

wobei R' eine Alkyl- oder Arylgruppe mit bis zu 12 Kohlenstoffatomen, R eine niedere Alkylgruppe mit bis zu 4 Kohlenstoffatomen und r eine Zahl von 0 bis 3 ist.

Beispiele für geeignete Selektivitätsregulatoren sind Ester wie p-Ethoxybenzoesäureethylester, Phthalsäurediisobutylester, Benzoesäureethylester und p-Methylbenzoesäureethylester sowie Organosilane wie Diisobutyldimethoxysilan, n-Propyltrimethoxysilan, Isopropyltrimethoxysilan, Ethyltriethoxysilan und Cyclohexylmethyldimethoxysilan. Der Selektivitätsregulator wird in ausreichender Menge vorgesehen, so daß im Prokatalysator zwischen 0,01 Mol und 100 Mol pro Mol Titan vorhanden sind. Vorzugsweise wird der Selektivitätsregulator jedoch in solcher Menge eingesetzt, daß zwischen 0,5 Mol und 70 Mol, besser noch zwischen 8 Mol und 50 Mol dieses Regulators pro Mol Titan im Prokatalysator vorhanden sind.

Die Komponenten des Olefinpolymerisationskatalysators werden normalerweise durch Mischen in einem geeigneten Reaktor zusammengebracht, der sich außerhalb der Anlage zur Polymerisation des α-Olefins befindet. Der bei dieser Reaktion entstehende Katalysator wird anschließend in den Polymerisationsreaktor gegeben. Alternativ können die Katalysator-Komponenten aber auch einzeln in den Polymerisationsreaktor gegeben werden, oder es können, sofern gewünscht, zwei oder alle Komponenten teilweise oder vollständig miteinander vermischt werden (z.B. durch Vormischen des Selektivitätsregulators und des Prokatalysators), bevor sie in den Polymerisationsreaktor gegeben werden.

Der erfindungsgemäße Olefinpolymerisationskatalysator dient zur Polymerisation von α-Olefinen und insbesondere von α-Olefinen mit bis zu 20 Kohlenstoffatomen, wie Propylen, 1-Buten, Dodecen oder Mischungen davon. Für eine Polymerisation werden α-Olefine mit 3 bis 10 Kohlenstoffatomen, wie Propylen, Buten-1, Penten-1 und Hexen-1, für eine eventuelle Copolymerisation α-Olefine mit 2 bis 10 Kohlenstoffatomen bevorzugt.

Die Art des angewandten Polymerisationsverfahrens ist für die Anwendbarkeit der vorliegenden Erfindung nicht entscheidend, und die derzeit als üblich angesehenen Polymerisationsverfahren sind für den Einsatz der Erfindung geeignet. Die Polymerisation wird unter Polymerisationsbedingungen als Flüssigphasenverfahren oder als Gasphasenverfahren unter Verwendung einer Katalysatorwirbelschicht durchgeführt.

Bei der in der Flüssigphase durchgeführten Polymerisation wird als Reaktionsverdünnungsmittel ein inertes flüssiges Verdünnungsmittel zugesetzt; alternativ kommt ein flüssiges Verdünnungsmittel zum Einsatz, das das zu polymerisierende Olefin, wie Propylen oder 1-Buten, bereits enthält. Soll ein Copolymer hergestellt werden, bei dem eines der Monomere Ethylen ist, wird dem Verdünnungsmittel auf herkömmliche Weise Ethylen zugesetzt. Typische Polymerisationsbedingungen bedeuten eine Reaktionstemperatur zwischen 25 °C und 125 °C, vorzugsweise jedoch zwischen 35 °C und 90 °C, sowie einen ausreichenden Druck, um das Reaktionsgemisch in flüssiger Phase zu halten. Die dafür notwendigen Drücke liegen zwischen 1,03 MPa [150 psi] und 8,27 Mpa [1200 psi]; Druckwerte zwischen 1,72 MPa [250 psi] und 6,20 MPa [900 psi ]sind jedoch vorzuziehen. Die Flüssigphasenreaktion wird als diskontinuierliches, kontinuierliches oder halbkontinuierliches Verfahren durchgeführt. Nach der Reaktion wird das Polymerprodukt mit Hilfe herkömmlicher Verfahren gewonnen. Die präzise Steuerung der Polymerisationsbedingungen und Reaktionsparameter des Flüssigphasenverfahrens entsprechen dem Stand der Technik.

Die Polymerisation kann gemäß einer anderen Methode der vorliegenden Erfindung auch im Gasphasenverfahren unter Verwendung einer Katalysatorwirbelschicht durchgeführt werden. Eine derartige Polymerisation im Gasphasenverfahren wurde von Goeke et al., US-Patent 4.379.759, beschrieben; auf diese Veröffentlichung wird hiermit verwiesen. Das Gasphasenverfahren umfaßt normalerweise das Beschicken des Reaktors mit einer bestimmten Menge als Vorprodukt gebildeter Polymerteilchen und einem gasförmigen Monomer sowie eine separate Zugabe einer geringeren Menge der einzelnen Katalysatorkomponenten. Das gasförmige Monomer, zum Beispiel Propylen, wird mit hohem Durchsatz und unter Temperatur- und Druckbedingungen, die zur Initiierung und Aufrechterhaltung der Polymerisation ausreichen, durch die Wirbelschicht aus festen Teilchen geführt. Nichtumgesetztes Olefin wird abgetrennt und wieder zurückgeführt. Polymerisierte Olefinteilchen werden in etwa mit der Geschwindigkeit abgezogen, mit der sie gebildet werden. Das Verfahren läuft diskontinuierlich, kontinuierlich oder halbkontinuierlich bei ständiger oder unterbrochener Zugabe der Katalysatorkomponenten und/oder des α-Olefins zum Polymerisationsreaktor. Das Verfahren wird vorzugsweise kontinuierlich durchgeführt. Typische Polymerisationstemperaturen für ein Gasphasenverfahren liegen zwischen 30 °C und 120 °C, typische Drücke bewegen sich in einer Größenordnung bis etwa 6,89 MPa [1000 psi], vorzugsweise jedoch zwischen 0,69 [100] und 3,45 MPa [500 psi].

Bei der Polymerisation sowohl im Flüssig- als auch im Gasphasenverfahren wird dem Reaktionsgemisch molekularer Wasserstoff als Kettenüberträger zur Regelung des Molekulargewichts des Polymerprodukts zugegeben. Für diesen Zweck wird häufig Wasserstoff eingesetzt, und zwar nach Verfahren, die Fachleuten allgemein bekannt sind. Die präzise Steuerung der Reaktionsbedingungen und die Eintragsmenge und -geschwindigkeit der zuzusetzenden Komponenten und des molekularen Wasserstoffs entsprechen weitgehend dem Stand der Technik.

Die gemäß der vorliegenden Erfindung hergestellten Polymere sind vorwiegend isotaktisch. Wenn nur ein α-Olefinmonomer der Polymerisation unterzogen wird, entsteht als Polymerisationsprodukt ein Homopolymer. Das Polymerisationsverfahren kann aber auch zur Herstellung von Copolymeren oder Terpolymeren eingesetzt werden, wenn zwei oder mehr α-Olefine gemäß dem Verfahren der vorliegenden Erfindung polymerisiert werden, zum Beispiel bei der Herstellung von Ethylen-Propylen-Kautschuk oder schlagzähen Polypropylen-Copolymeren.

### Beispiel I

A) In einem 236 ml fassenden Reaktionsgefäß wurden 4,0 g siliciumdioxidhaltiges, karbonisiertes Magnesiumethylat (19 mmol Magnesium und 21 mmol Kohlendioxid) und 55 ml Chlorbenzol mit einem Rührer unter trockenem Stickstoff gemischt. Dieser Mischung wurden 4,6 ml (38 mmol) Dimethyldichlorsilan zugefügt. Das Reaktionsgemisch wurde unter Rühren langsam auf etwa 90 °C erhitzt und sodann etwa 60 Minuten lang bei dieser Temperatur gehalten. Die entstandene Aufschlämmung wurde noch heiß filtriert und der erhaltene Feststoff in einer inerten Umgebung, z.B. im Stickstoffstrom, getrocknet.
B) Zu 4,0 g siliciumdioxidhaltigem, karbonisiertem Magnesiumethylat (19 mmol Mg und 21 mmol Kohlendioxid) wurden 55 ml (456 mmol) Dimethyldichlorsilan unter trockenem Stickstoff hinzugefügt. Diese Mischung wurde unter Rühren langsam auf 70 °C erhitzt und sodann etwa 60 Minuten lang bei dieser Temperatur gehalten. Die entstandene Aufschlämmung wurde filtriert, dreimal mit 125 ml Isooctan gewaschen und sodann in einer inerten Umgebung getrocknet.
C) Zu 4,0 g siliciumdioxidhaltigem, karbonisiertem Magnesiumethylat (19 mmol Mg und 21 mmol Kohlendioxid) wurden unter trockenem Stickstoff 4,6 ml (38 mmol) Dimethyldichlorsilan und 0,4 ml (1,5 mmol) Phthalsäurediisobutylester in 55 ml Chlorbenzol hinzugefügt. Diese Mischung wurde unter Rühren langsam auf 90 °C erhitzt und sodann 60 Minuten lang bei dieser Temperatur gehalten. Die Mischung wurde noch heiß filtriert und in einer inerten Umgebung, z.B. im Stickstoffstrom, getrocknet.
D) Zu 4,0 g siliciumdioxidhaltigem, karbonisiertem Magnesiumethylat (19 mmol Mg und 21 mmol Kohlendioxid) wurden 4,6 ml (38 mmol) Dimethyldichlorsilan in 55 ml Toluol hinzugefügt. Diese Mischung wurde unter Rühren langsam auf 90 °C erhitzt und sodann 60 Minuten lang bei dieser Temperatur gehalten. Die Mischung wurde noch heiß filtriert und in einer inerten Umgebung, z.B. im Stickstoffstrom, getrocknet.
E) Zu 4,0 g siliciumdioxidhaltigem, karbonisiertem Magnesiumethylat wurden 4,6 ml (38 mmol) Dimethyldichlorsilan in 55 ml Isooctan hinzugefügt. Diese Mischung wurde unter Rühren langsam auf 90 °C erhitzt und sodann 60 Minuten lang bei dieser Temperatur gehalten. Die Mischung wurde noch heiß filtriert und unter Stickstoff getrocknet.
F) Zu 4,0 g siliciumdioxidhaltigem, karbonisiertem Magnesiumethylat wurden 4,6 ml (38 mmol) Dimethyldichlorsilan in 55 ml Ethylbenzol hinzugefügt. Diese Mischung wurde unter Rühren langsam auf 90 °C erhitzt und sodann 60 Minuten lang bei dieser Temperatur gehalten. Die Mischung wurde noch heiß filtriert und unter Stickstoff getrocknet.
G) Zu 4,0 g siliciumdioxidhaltigem, karbonisiertem Magnesiumethylat wurden 4,6 ml Dimethyldichlorsilan in 55 ml Xylol hinzugefügt. Diese Mischung wurde unter Rühren langsam auf 90 °C erhitzt und sodann 60 Minuten lang bei dieser Temperatur gehalten. Die Mischung wurde noch heiß filtriert und unter Stickstoff getrocknet.
H) Zu 4,0 g siliciumdioxidhaltigem, karbonisiertem Magnesiumethylat wurden 55 ml (456 mmol) Dimethyldichlorsilan und Phthalsäurediisobutylester (2,75 mmol bzw. 1,50 mmol) hinzugefügt. Diese Mischung wurde unter Rühren langsam auf 70 °C erhitzt und sodann 60 Minuten lang bei dieser Temperatur gehalten. Die Mischung wurde noch heiß filtriert und unter Stickstoff getrocknet.

### Beispiel II

A) Zu 4,0 g siliciumdioxidhaltigem, karbonisiertem Magnesiumethylat (19 mmol Mg und 21 mmol Kohlendioxid) in 55 ml Chlorbenzol wurden unter trockenem Stickstoff 9,6 ml (76 mmol) Trimethylchlorsilan hinzugefügt. Diese Mischung wurde unter Rühren langsam auf 90 °C erhitzt und sodann 120 Minuten lang bei dieser Temperatur gehalten. Die Mischung wurde noch heiß filtriert und in einer inerten Umgebung, z.B. im Stickstoffstrom, getrocknet.
B) Zu 4,0 g siliciumdioxidhaltigem, karbonisiertem Magnesiumethylat (19 mmol Mg und 21 mmol Kohlendioxid) in 55 ml Chlorbenzol wurden unter trockenem Stickstoff 19,32 ml (152 mmol) Trimethylchlorsilan hinzugefügt. Diese Mischung wurde unter Rühren langsam auf 90 °C erhitzt und sodann 120 Minuten lang bei dieser Temperatur gehalten. Die Mischung wurde noch heiß filtriert und in einer inerten Umgebung, z.B. im Stickstoffstrom, getrocknet.
C) Zu 4,0 g siliciumdioxidhaltigem, karbonisiertem Magnesiumethylat (19 mmol Mg und 21 mmol Kohlendioxid) in 55 ml Chlorbenzol wurden unter trockenem Stickstoff 9,6 ml (76 mmol) Trimethylchlorsilan hinzugefügt. Diese Mischung wurde unter Rühren langsam auf 60 °C erhitzt und sodann 60 Minuten lang bei dieser Temperatur gehalten. Die Mischung wurde noch heiß filtriert und in einer inerten Umgebung getrocknet.

### Beispiel III

Zu 4,0 g siliciumdioxidhaltigem, karbonisiertem Magnesiumethylat (19 mmol Mg und 21 mmol Kohlendioxid) in 55 ml Chlorbenzol wurden 20 ml (95 mmol) Chlordiphenylmethylsilan hinzugefügt. Diese Mischung wurde 60 Minuten lang bei einer Temperatur von 100 °C gerührt, sodann noch heiß filtriert und der erhaltene Feststoff im Stickstoffstrom getrocknet.

### Vergleichsbeispiel

Zur Herstellung eines Prokatalysators und eines Katalysators wurden 4,0 g siliciumdioxidhaltiges, karbonisiertes Magnesiumethylat (19 mmol Mg und 21 mmol Kohlendioxid) gemäß den Ausführungen unter "Herstellung des Prokatalysators und anschließend des Katalysators" (Beispiel IV, Absatz A) eingesetzt. Der Katalysator wurde für die Vergleichsansätze gemäß Tabelle I verwendet.

### Beispiel IV

Herstellung des Prokatalysators und anschließend des Katalysators
A) Pro 19 mmol Magnesium in der Prokatalysator-Vorstufe wurde jedes Prokatalysator-Vorstufenprodukt der Beispiele I, II, III und des Vergleichsbeispiels eine Stunde lang bei 110 °C mit Phthalsäurediisobutylester (0 mmol, 1,25 mmol, 1,50 mmol, 1,75 mmol, 2,00 mmol bzw. 2,75 mmol) in 55 ml einer 50/50-Mischung (Volumenteile) aus Titantetrachlorid und Chlorbenzol gerührt. Die entstandene Mischung wurde noch heiß filtriert und der Feststoff gewonnen. 55 ml der 50/50-Mischung wurden zum erhaltenen Feststoff hinzugefügt und 60 Minuten lang bei 110 °C gerührt. Die entstandene Aufschlämmung wurde filtriert und mit 55 ml der 50/50-Mischung erneut aufgeschlämmt. Sodann wurde die erhaltene Aufschlämmung 30 Minuten lang bei 110 °C gerührt. Die Feststoffe wurden sechsmal bei Raumtemperatur mit 125 ml Isooctan gewaschen und sodann über Nacht im Stickstoffstrom getrocknet.
B) Pro 19 mmol Magnesium in der Prokatalysator-Vorstufe wurde das Prokatalysator-Vorstufenprodukt des Beispiels I (D) 60 Minuten lang bei 110 °C mit Phthalsäurediisobutylester (1,5 mmol) in 55 ml einer 50/50-Mischung (Volumenteile) aus Titantetrachlorid und Toluol gerührt. Die entstandene Mischung wurde noch heiß filtriert und der Feststoff gewonnen. 55 ml der 50/50-Mischung wurden zum erhaltenen Feststoff hinzugefügt und 60 Minuten lang bei 110 °C gerührt. Die entstandene Aufschlämmung wurde filtriert und mit 55 ml der 50/50-Mischung erneut aufgeschlämmt. Die danach erhaltene Aufschlämmung wurde 30 Minuten lang bei 110 °C gerührt und sodann filtriert. Die Feststoffe wurden sechsmal bei Raumtemperatur mit 125 ml Isooctan gewaschen und sodann über Nacht im Stickstoffstrom getrocknet.
C) Das Prokatalysator-Vorstufenprodukt des Beispiels I (F) wurde 60 Minuten lang bei 110 °C mit Phthalsäurediisobutylester (1,5 mmol) in 55 ml einer 50/50-Mischung (Volumenteile) aus Titantetrachlorid und Ethylbenzol pro 19 mmol Magnesium in der Prokatalysator-Vorstufe gerührt. Die entstandene Mischung wurde noch heiß filtriert und der Feststoff gewonnen. 55 ml der 50/50-Mischung wurden zum erhaltenen Feststoff hinzugefügt und 60 Minuten lang bei 110 °C gerührt. Die entstandene Aufschlämmung wurde filtriert und mit 55 ml der 50/50-Mischung erneut aufgeschlämmt. Die danach erhaltene Aufschlämmung wurde 30 Minuten lang bei 110 °C gerührt und sodann filtriert. Die Feststoffe wurden sechsmal bei Raumtemperatur mit 125 ml Isooctan gewaschen und dann über Nacht im Stickstoffstrom getrocknet.

Jeder gemäß den vorstehenden Abschnitten A, B und C hergestellte Prokatalysator wurde durch Mischen mit Triethylaluminium als Kokatalysator und n-Propyltrimethoxysilan als Selektivitätsregulator in einen Olefinpolymerisationskatalysator umgewandelt. Die so erhaltenen Katalysatoren wurden zur Propylenpolymerisation nach dem Suspensionsverfahren mit flüssigem Propylen als Verdünnungsmittel eingesetzt. Die Polymerisationen erfolgten in einem 4,5-1-Autoklaven innerhalb 1 Stunde bei 67 °C, wobei 43 mmol Wasserstoff zugesetzt wurden. Zur Erzielung eines Al/ Si/Ti-Molverhältnisses von 100/25/1 wurden die Katalysatorkomponenten in ausreichenden Mengen eingesetzt.

Die Ergebnisse dieser Polymerisationen sind in Tabelle I zusammengestellt, wobei sich "Ausbeute" auf die Polypropylenpolymer-Ausbeute in Millionen Gramm ("MMg") Polymer/g Titan im Prokatalysator pro Stunde bezieht. Die Stereoselektivität des Katalysators wird durch Bestimmen der Löslichkeit in Xylol in Gewichtsprozent (in der Tabelle als LX abgekürzt) gemäß der Vorschrift 21 C.F.R. 177.1520 der amerikanischen Lebensmittelbehörde (FDA) ermittelt. Der Anteil der in Xylol gelösten Stoffe besteht vorwiegend aus amorphem (ataktischem) Polymer und halbkristallinem Polymer. Der Gewichtsanteil von Titan (Ti Gew.-%) wird als die im Prokatalysator vorhandene Titanmenge, bezogen auf das Gewicht des Prokatalysators, bestimmt.

**TABELLE I**

| Quelle der Vorstufe¹ | DIBP² in mmol | Ti (Gew.-%) | Ausbeute (MMgPP/g-Ti-h) | LX (Gew.-%) |
|---|---|---|---|---|
| I A | 1,50 | 1,6 | 1,6 | 1,9 |
| I A | 1,75 | 1,8 | 1,4 | 1,9 |
| I A | 2,75 | 1,6 | 1,6 | 1,6 |
| I B | 1,25 | 1,8 | 1,3 | 3,1 |
| I C | 1,25 | 1,4 | 1,3 | 1,6 |
| I C | 0 | 1,7 | 1,2 | 2,5 |
| I D | 1,50 | 1,4 | 1,7 | 1,9 |
| I D | 2,75 | 1,4 | 1,7 | 1,6 |
| I E | 2,75 | 1,8 | 1,5 | 1,7 |
| I F | 2,75 | 1,5 | 1,5 | 1,3 |
| I G | 2,75 | 1,7 | 1,4 | 1,6 |
| I G | 1,50 | 1,7 | 1,4 | 2,4 |
| I H | 1,50 | 2,3 | 0,72 | 6,2 |
| I H | 2,75 | 2,2 | 1,0 | 3,1 |
| II A | 2,00 | 1,5 | 0,86 | 3,6 |
| II B | 2,00 | 1,6 | 0,90 | 3,9 |
| II C | 2,00 | 2,5 | 0,91 | 3,0 |
| Vergleich | 2,75 | 2,5 | 0,96 | 2,8 |
| Vergleich | 2,75 | 2,5 | 1,1 | 2,8 |
| III | 1,50 | 2,1 | 1,1 | 2,2 |

| | | | | |
|---|---|---|---|---|
| ¹ Die Quelle der Vorstufe entspricht den Ausführungen zu den Beispielen I bis III und dem Vergleichsbeispiel. | | | | |
| ² Zugabe von DIBP (Phthalsäurediisobutylester) in mmol in Gegenwart der Vorstufe und von Titantetrachlorid (gemäß Beispiel IV A). | | | | |

**TABELLE II**

| Quelle der Vorstufe¹ | DIBP² (mmol) | Ausbeute (MMgPP/g-Ti-h) | LX (Gew.-%) |
|---|---|---|---|
| I A | 1,25 | 1,4 | 2,6 |
| I A | 1,25 | 1,3 | 2,2 |
| Vergleich | 1,25 | 0,8 | 5,9 |
| I A | 2,75 | 1,6 | 1,6 |
| Vergleich | 2,75 | 1,0 | 2,9 |

| | | | |
|---|---|---|---|
| ¹ Die Quelle der Vorstufe entspricht den Ausführungen zum Beispiel I und zum Vergleichsbeispiel. | | | |
| ² Einsatz von DIBP (Phthalsäurediisobutylester) in mmol bei der Herstellung des Prokatalysators. | | | |

Aus Tabelle II geht hervor, daß die Aktivität des Katalysators (bezogen auf die im Prokatalysator enthaltene Titanmenge) höher ist als die Aktivität des ausgehend vom Vergleichsversuch hergestellten Katalysatorsystems. Ein weiterer Vorteil des erfindungsgemäßen Katalysatorsystems liegt in der Verminderung der Löslichkeit in Xylol.

**TABELLE III**

| Quelle der Vorstufe¹ | DIBP² in Vorstufe (mmol) | Zugabe von DIBP³ (mmol) | Ausbeute (MMgPP/g-Ti-h) | LX (Gew.-%) |
|---|---|---|---|---|
| I C | 1,50 | 1,25 | 1,3 | 1,6 |
| I C | 1,50 | 0 | 1,2 | 2,5 |
| I H | 1,50 | 0 | 0,72 | 6,2 |
| I H | 2,75 | 0 | 1,0 | 3,1 |
| Vergleich | 0 | 1,25 | 0,8 | 5,9 |

| | | | | |
|---|---|---|---|---|
| ¹ Die Quelle der Vorstufe entspricht den Ausführungen zu Beispiel I, Abschnitte C und H, und zum Vergleichsbeispiel. | | | | |
| ² Einsatz von DIBP (Phthalsäurediisobutylester) in mmol bei der Herstellung der Prokatalysator-Vorstufe. | | | | |
| ³ Zugabe von DIBP in mmol in Gegenwart der Prokatalysator-Vorstufe und von Titantetrachlorid. | | | | |

**TABELLE IV**

| Quelle der Vorstufe¹ | DIBP (mmol) | Ti (Gew.-%) | Ausbeute (MMgPP/g-Ti-h) | LX (Gew.-%) |
|---|---|---|---|---|
| I D | 1,50² | 1,6 | 1,6 | 1,8 |
| I F | 1,50³ | 1,6 | 1,5 | 1,8 |
| Vergleich | 1,25 | 3,1 | 0,8 | 5,9 |
| Vergleich | 2,75 | 2,5 | 1,0 | 2,8 |

| | | | | |
|---|---|---|---|---|
| ¹ Die Quelle der Vorstufe entspricht den Ausführungen zu Beispiel I (D) und (F) und zum Vergleichsbeispiel. | | | | |
| ² Zugabe von DIBP in mmol in Gegenwart der Prokatalysator-Vorstufe und von Titantetrachlorid (gemäß Beispiel IV B). | | | | |
| ³ Zugabe von DIBP in mmol in Gegenwart der Prokatalysator-Vorstufe und von Titantetrachlorid (gemäß Beispiel IV C). | | | | |

## Patentansprüche

1. Prokatalysator-Vorstufe für die Olefinpolymerisation, erhältlich durch Umsetzen
(a) eines karbonisierten Magnesiumalkoholats der allgemeinen Formel 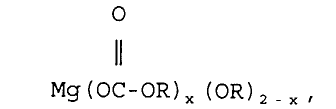 wobei R eine Kohlenwasserstoffgruppe mit bis zu 20 Kohlenstoffatomen und x eine Zahl von 0,1 bis 2 bezeichnet, mit
(b) einem oder mehreren Halogensilanen bei einer Temperatur von 40 bis 150°C;
mit der Maßgabe, daß bei der Umsetzung von (a) und (b) kein vierwertiges Titanhalogenid zugegen ist.

2. Prokatalysator-Vorstufe nach Anspruch 1, dadurch gekennzeichnet, daß es sich bei dem karbonisierten Magnesiumalkoholat um karbonisiertes Magnesiumethylat handelt.

3. Prokatalysator-Vorstufe nach Anspruch 1, dadurch gekennzeichnet, daß das karbonisierte Magnesiumalkoholat und ein oder mehrere Halogensilane bei einer Temperatur von 40 bis 150°C in Gegenwart eines inerten Verdünnungsmittels zur Reaktion gebracht werden.

4. Prokatalysator-Vorstufe nach Anspruch 3, dadurch gekennzeichnet, daß es sich bei dem karbonisierten Magnesiumalkoholat um karbonisiertes Magnesiumethylat handelt.

5. Prokatalysator-Vorstufe nach Anspruch 4, dadurch gekennzeichnet, daß das Halogensilan 1 bis 4 Halogenatome aufweist.

6. Prokatalysator-Vorstufe nach Anspruch 5, dadurch gekennzeichnet, daß es sich bei dem Halogen um Brom, Chlor, Fluor oder Jod handelt.

7. Prokatalysator-Vorstufe nach Anspruch 6, dadurch gekennzeichnet, daß es sich bei dem Halogen um Chlor handelt.

8. Prokatalysator-Vorstufe nach Anspruch 7, dadurch gekennzeichnet, daß es sich bei dem Halogensilan um ein Dialkyldichlorsilan handelt.

9. Prokatalysator-Vorstufe nach Anspruch 1, dadurch gekennzeichnet, daß das karbonisierte Magnesiumalkoholat und ein oder mehrere Halogensilane bei einer Temperatur von 40 bis 150°C in Gegenwart eines Elektronendonators umgesetzt werden.

10. Olefinpolymerisations-Prokatalysator, der durch Reaktion eines vierwertigen Titanhalogenids und eines Elektronendonators mit einer Prokatalysator-Vorstufe erhalten wird, die wiederum erhältlich ist durch Umsetzen
(a) eines karbonisierten Magnesiumalkoholats der allgemeinen Formel 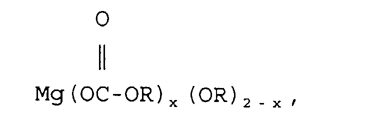 wobei R eine Kohlenwasserstoffgruppe mit bis zu 20 Kohlenstoffatomen und x eine Zahl von 0,1 bis 2 ist, mit
(b) einem oder mehreren Halogensilanen bei einer Temperatur von 40 bis 150°C;
mit der Maßgabe, daß bei der Umsetzung von (a) und (b) kein vierwertiges Titanhalogenid zugegen ist.

11. Prokatalysator nach Anspruch 10, dadurch gekennzeichnet, daß es sich bei dem karbonisierten Magnesiumalkoholat um karbonisiertes Magnesiumethylat handelt.

12. Olefinpolymerisations-Prokatalysator nach Anspruch 10, dadurch gekennzeichnet, daß das karbonisierte Magnesiumalkoholat und ein oder mehrere Halogensilane bei einer Temperatur von 40 bis 150°C in Gegenwart eines inerten Verdünnungsmittels zur Reaktion gebracht werden.

13. Prokatalysator nach Anspruch 12, dadurch gekennzeichnet, daß es sich bei dem karbonisierten Magnesiumalkoholat um karbonisiertes Magnesiumethylat handelt.

14. Prokatalysator nach Anspruch 13, dadurch gekennzeichnet, daß das Halogensilan 1 bis 4 Chloratome enthält.

15. Prokatalysator nach Anspruch 14, dadurch gekennzeichnet, daß es sich bei dem vierwertigen Titanhalogenid um Titantetrachlorid handelt.

16. Prokatalysator nach Anspruch 15, dadurch gekennzeichnet, daß der Elektronendonator ein Alkylester einer aromatischen Monocarbon- oder Dicarbonsäure ist.

17. Olefinpolymerisationskatalysator, hergestellt durch Umsetzung des Prokatalysators nach Anspruch 10 mit einem aluminiumorganischen Kokatalysator und einem Selektivitätsregulator.

18. Olefinpolymerisationskatalysator nach Anspruch 17, dadurch gekennzeichnet, daß es sich bei dem Selektivitätsregulator um einen Alkylester einer aromatischen Monocarbon- oder Dicarbonsäure oder eine Organosilanverbindung der Formel
R'ᵣSi(OR)₄₋ᵣ
handelt, wobei R' eine Alkyl- oder Arylgruppe mit bis zu 12 Kohlenstoffatomen, R eine niedere Alkylgruppe mit bis zu 4 Kohlenstoffatomen und r eine Zahl von 0 bis 3 ist.

19. Verfahren zur Polymerisation eines oder mehrerer α-Olefine durch Umsetzen eines oder mehrerer dieser α-Olefine unter Polymerisationsbedingungen mit dem Katalysator nach Anspruch 18.

## Claims

1. A procatalyst precursor for olefin polymerization, obtainable by reacting
(a) a carbonated magnesium alkoxide of the general formula 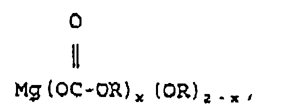 where R is a hydrocarbon group having up to 20 carbon atoms and x is from 0.1 to 2, with
(b) one or more halosilanes at a temperature of from 40 to 150°C;
with the proviso that no tetravalent titanium halide is present during the reaction of (a) and (b).

2. A procatalyst precursor according to claim 1, characterized in that the carbonated magnesium alkoxide is a carbonated magnesium ethoxide.

3. A procatalyst precursor according to claim 1, characterized in that the carbonated magnesium alkoxide and one or more halosilanes are reacted at a temperature of from 40 to 150°C in the presence of an inert diluent.

4. A procatalyst precursor according to claim 3, characterized in that the carbonated magnesium alkoxide is a carbonated magnesium ethoxide.

5. A procatalyst precursor according to claim 4, characterized in that the halosilane contains from 1 to 4 halogen atoms.

6. A procatalyst precursor as claimed in claim 5, characterized in that the halogen is bromine, chlorine, fluorine or iodine.

7. A procatalyst precursor according to claim 6, characterized in that the halogen is chlorine.

8. A procatalyst precursor according to claim 7, characterized in that the halosilane is a dialkyldichlorosilane.

9. A procatalyst precursor according to claim 1, characterized in that the carbonated magnesium alkoxide and one or more halosilanes are reacted at a temperature of from 40 to 150°C in the presence of an electron donor.

10. An olefin polymerization procatalyst which is obtained by reaction of a tetravalent titanium halide and an electron donor with a procatalyst precursor which in turn is obtainable by reacting
(a) a carbonated magnesium alkoxide of the general formula 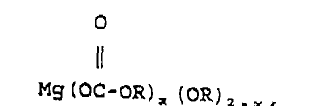 where R is a hydrocarbon group having up to 20 carbon atoms and x is from 0.1 to 2, with
(b) one or more halosilanes at a temperature of from 40 to 150°C;
with the proviso that no tetravalent titanium halide is present during the reaction of (a) and (b).

11. A procatalyst according to claim 10, characterized in that the carbonated magnesium alkoxide is a carbonated magnesium ethoxide.

12. An olefin polymerization procatalyst according to claim 10, characterized in that the carbonated magnesium alkoxide and one or more halosilanes are reacted at a temperature of from 40 to 150°C in the presence of an inert diluent.

13. A procatalyst according to claim 12, characterized in that the carbonated magnesium alkoxide is a carbonated magnesium ethoxide.

14. A procatalyst according to claim 13, characterized in that the halosilane contains from 1 to 4 chlorine atoms.

15. A procatalyst according to claim 14, characterized in that the tetravalent titanium halide is titanium tetrachloride.

16. A procatalyst according to claim 15, characterized in that the electron donor is an alkyl ester of an aromatic monocarboxylic or dicarboxylic acid.

17. An olefin polymerization catalyst prepared by reacting the procatalyst according to claim 10 with an organoaluminium cocatalyst and a selectivity regulator.

18. An olefin polymerization catalyst according to claim 17, characterized in that the selectivity regulator is an alkyl ester of an aromatic monocarboxylic or dicarboxylic acid or an organosilane compound of the formula
R'ᵣSi(OR)₄₋ᵣ,
where R' is an alkyl or aryl group having up to 12 carbon atoms, R is a lower alkyl group having up to 4 carbon atoms and r is from 0 to 3.

19. A process for the polymerization of one or more α-olefins by reacting one or more of these α-olefins with the catalyst according to claim 18 under polymerization conditions.

## Revendications

1. Stade préliminaire de procatalyseur pour la polymérisation d'oléfines, obtenue par mise en réaction
a) d'un alcoolate de magnésium carbonaté de formule générale : 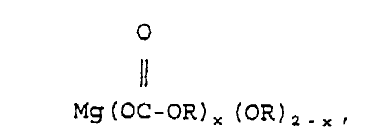 dans laquelle R désigne un groupe hydrocarboné ayant jusqu'à 20 atomes de carbone, et x désigne un nombre allant de 0,1 à 2.
b) avec un ou plusieurs halogénosilanes, à une température allant de 40 à 150°C
avec la restriction que lors de la réaction de a) et de b), aucun halogénure de titane quadrivalent n'est présent.

2. Stade préliminaire de procatalyseur selon la revendication 1,
caractérisé en ce qu'
il s'agit, en ce qui concerne l'alcoolate de magnésium carbonaté, d'éthylate de magnésium carbonaté.

3. Stade préliminaire de procatalyseur, selon la revendication 1,
caractérisé en ce que
l'alcoolate de magnésium carbonaté et un ou plusieurs halogénosilanes sont amenés en réaction à une température allant de 40 à 150°C, en présence d'un agent de dilution inerte.

4. Stade préliminaire de procatalyseur selon la revendication 3,
caractérisé en ce qu'
il s'agit en ce qui concerne l'alcoolate de magnésiun, carbonaté, d'éthylate de magnésium carbonaté.

5. Stade préliminaire de procatalyseur selon la revendication 4,
caractérisé en ce que
l'halogénosilane possède de 1 à 4 atomes d'halogène.

6. Stade préliminaire de procatalyseur selon la revendication 5,
caractérisé en ce qu'
il s'agit, en ce qui concerne l'halogène, de brome, de chlore, de fluor ou d'iode.

7. Stade préliminaire de procatalyseur selon la revendication 6,
caractérisé en ce qu'
il s'agit en ce qui concerne l'halogène, de chlore.

8. Stade préliminaire de procatalyseur selon la revendication 7,
caractérisé en ce qu'
il s'agit en ce qui concerne l'halogénosilane, d'un dialkyldichlorosilane.

9. Stade préliminaire de procatalyseur selon la revendication 1,
caractérisé en ce que
l'alcoolate de magnésium carbonaté, et un ou plusieurs halogénosilanes, sont mis à réagir à une température allant de 40 à 150°C, en présence d'un donneur d'électrons.

10. Procatalyseur pour la polymérisation des oléfines qui est obtenu par réaction d'un halogénure de titane quadrivalent, et d'un donneur d'électrons avec un stade préliminaire de procatalyseur, qui a nouveau, est obtenu par réaction ;
a) d'un alcoolate de magnésium carbonaté de formule générale ; 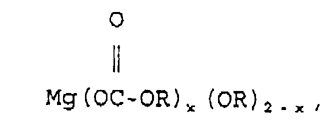 dans laquelle R est un groupe hydrocarboné ayant jusqu'à 20 atomes de carbone et x est un nombre allant de 0,1 à 2,
b) avec un ou plusieurs halogénosilanes, a une température allant de 40 à 150°C ;
avec la restriction que dans la réaction de a) et b) aucun halogénure de titane quadrivalent n'est présent.

11. Procatalyseur selon la revendication 10,
caractérisé en ce qu'
il s'agit, en ce qui concerne l'alcoolate de magnésium carbonaté, d'éthylate de magnésium carbonaté.

12. Procatalyseur de polymérisation d'oléfines selon la revendication 10,
caractérisé en ce que
l'alcoolate de magnésium carbonaté et un ou plusieurs halogénosilanes sont amenés en réaction à une température allant de 40 à 150°C en présence d'un agent de dilution inerte.

13. Procatalyseur selon la revendication 12,
caractérisé en ce que
il s'agit en ce qui concerne l'alcoolate de magnésium carbonaté, d'éthylate de magnésium carbonaté.

14. Procatalyseur selon la revendication 13,
caractérisé en ce que
l'halogénosilane contient de 1 à 4 atomes de chlore.

15. Procatalyseur selon la revendication 14,
caractérisé en ce qu'
il s'agit en ce qui concerne l'halogénure de titane quadrivalent, de tétrachlorure de titane.

16. Procatalyseur selon la revendication 15,
caractérisé en ce que
le donneur d'électrons est un ester d'alkyle d'un acide monocarboxylique ou d'un acide dicarboxylique aromatique.

17. Catalyseur de polymérisation d'oléfine, produit par réaction du procatalyseur selon la revendication 10, avec un cocatalyseur alumino-organique et un régulateur de sélectivité.

18. Catalyseur de polymérisation d'oléfine selon la revendication 17,
caractérisé en ce qu'
il s'agit, concernant le régulateur de sélectivité, d'un ester d'alkyle d'un acide monocarboxylique ou dicarboxylique aromatique, ou d'un composé d'organosilane de formule :
R' ᵣSi(OR)₄₋ᵣ
dans laquelle R' est un groupe alkyle ou aryle ayant jusqu'à 12 atomes de carbone, R est un groupe alkyle inférieur, ayant jusqu'à 4 atomes de carbone et x est un nombre allant de 0 à 3.

19. Procédé de polymérisation d'une ou plusieurs oléfines, par réaction d'une ou plusieurs de ces α-oléfines dans des conditions de polymérisation, avec le catalyseur selon la revendication 18.
